# EUROPÄISCHE PATENTSCHRIFT

(11) **EP 0 761 705 B1**
(45) Veröffentlichungstag und Bekanntmachung des Hinweises auf die Patenterteilung: **24.11.1999**
(21) Anmeldenummer: 96110341.3
(22) Anmeldetag: 27.06.1996
(51) Int. Cl.: C08G 18/22, C08G 18/79

(54) **Flüssige Einkomponenten-PUR-Einbrennlacke**
Liquid one-component polyurethane storing lacquers
Vernis en faux liquides de polyurethane à composant unique

(30) Priorität: 01.09.1995 DE 19532294
(43) Veröffentlichungstag der Anmeldung: 12.03.1997
(73) Patentinhaber: Degussa-Hüls Aktiengesellschaft, 60287 Frankfurt am Main (DE)
(72) Erfinder: Braunstein, Richard, 46282 Dorsten (DE); Schmitt, Felix, Dr., 45701 Herten (DE); Wolf, Elmar, Dr., 45661 Recklinghausen (DE)

(56) Entgegenhaltungen:
- EP-A- 0 269 943
- US-A- 4 584 362
- US-A- 5 156 915

## Beschreibung

Die vorliegende Erfindung betrifft flüssige PUR-Einbrennlacke mit hohem Festkörpergehalt, die als Einkomponentensysteme (lK-PUR-Einbrennlacke) eingesetzt werden können.

Einbrennlacke auf Basis hydroxylgruppenhaltiger Polyester, die mit Uretdiongruppen enthaltenden Polyisocyanaten vernetzt werden, sind bekannt. In der DE 30 30 554 werden Einbrennlacke, bestehend aus hydroxylgruppenhaltigen Polymeren (ggf. Polyestern), einem teilweise oder ganz blockierten, gegebenenfalls mit Glykolen kettenverlängerten Uretdion des Isophorondiisocyanates (IPDI), und einem organischen Lösungsmittel, beschrieben. Werden diesen Einbrennlacken zur Reduzierung der Einbrenntemperatur Urethankatalysatoren zugesetzt, sind sie bei Raumtemperatur, erst recht bei mäßig erhöhten Temperaturen (50 °C) nicht mehr lagerstabil. Die Ursache für diese mangelnde Lagerstabilität ist, wie eigene Untersuchungen ergaben, die Reaktion der Uretdiongruppe mit den OH-Gruppen des im Gemisch vorliegenden Polyols unter Bildung von Allophanatgruppen:

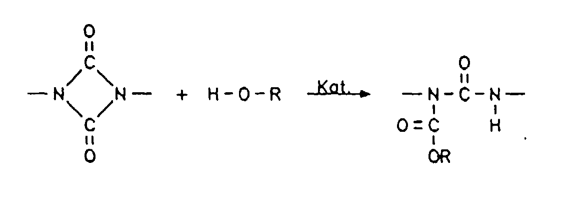

Überraschenderweise wurde gefunden, daß mit Bismut-Salzen organischer Säuren als Katalysatoren die Härtungstemperaturen der in der DE 30 30 554 beschriebenen lK-PUR-Einbrennlacke gesenkt werden können, ohne daß dabei gleichzeitig deren Lagerstabilität negativ beeinflußt wird.

Gegenstand der vorliegenden Erfindung sind somit flüssige Einkomponenten-PUR-Einbrennlacke, im wesentlichen enthaltend
a) hydroxylgruppenhaltige Polymere mit Hydroxylzahlen zwischen 10 und 300 mg KOH/g,
b) teilweise oder ganz blockierte, uretdiongruppenhaltige Polyisocyanate auf Basis von Isophorondiisocyanat,
c) organische Bismut-Verbindungen folgender Zusammensetzung: 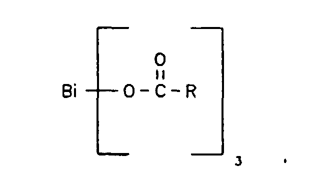 wobei R ein aliphatischer Kohlenwasserstoffrest mit 1 bis 16 C-Atomen ist,
d) organische Lösemittel oder Lösungsmittelgemische, wobei (a + b) gleich 40 bis 70 Gew.-T., c gleich 0,5 bis 5 Gew.-T. und d gleich 30 bis 60 Gew.-T. betragen, und a mit b so zueinander im OH-NCO-Äquivalenzverhältnis stehen, daß pro OH-Äquivalent der Komponente a 0,8 bis 1,2 NCO-Äquivalente der Komponente b vorhanden sind.

Als erfindungsgemäß einsetzbare hydroxylgruppenhaltige Polymere (Komponente a) werden hydroxylgruppenhaltige Polyester aus aliphatischen, cycloaliphatischen und/oder aromatischen Polycarbonsäuren mit Hydroxylzahlen zwischen 25 und 150 mg KOH/g bevorzugt. Für diesen Einsatzzweck sollten die Polyester weiter einen niedrigen Glasumwandlungspunkt besitzen, d. h. zwischen 20 und -25 °C. Die geeigneten Polyester besitzen darüber hinaus mehr als zwei OH-Gruppen im Durchschnitt pro Molekül.

Geeignete aliphatische, cycloaliphatische und aromatische Polycarbonsäuren sind, wobei die aromatischen ein- oder mehrkernig sein können, z. B. Oxalsäure, Bernsteinsäure, Glutarsäure, 2,2-Dimethylglutarsäure, Adipinsäure, 2,2,4- bzw. 2,4,4-Trimethyladipinsäure, Sebacinsäure, Dodecandicarbonsäure, Terephthalsäure, Methylterephthalsäure, 2,5- und 2,6-Dimethylterephthalsäure, Chlorterephthalsäure, 2,5-Dichlorterephthalsäure, Fluorterephthalsäure, Isophthalsäure, Phthalsäure, Trimellithsäure, Naphthalindicarbonsäure, insbesondere die 1,4-, 1,5-, 2,6- und 2,7-Isomeren, Phenylendiessigsäure, 4-Carboxyphenoxyessigsäure, m- und p-Terphenyl-1,4''-Dicarbonsäure, Dodecahydrodiphensäure, Tetrahydrophthalsäure, Hexahydrophthalsäure, Hexahydroterephthalsäure, 4,4'-Diphensäure, 2,2'- und 3,3'-Dimethyl-4,4'-diphensäure, 2,2'-Dibrom-4,4'-diphensäure, Bis-(4-carboxyphenyl)methan, 1,1- und 1,2-Bis-(4-carboxyphenyl)-ethan, 2,2-Bis-(4-carboxyphenyl)-propan, 1,2-Bis-(4-carboxyphenoxy)-ethan, Bis-4-carboxyphenylether, Bis-4-carboxyphenylsulfid, Bis-4-carboxyphenylketon, Bis-4-carboxyphenylsulfoxid, Bis-4-carboxyphenylsulfon, 2,8-Dibenzofurandicarbonsäure, 4,4'-Stilbendicarbonsäure und Octadecahydro-m-terphenyl-4,4''-dicarbonsäure u. a.. Auch ungesättigte Säuren, die sich von vorgenannten Säuren ableiten lassen, können verwendet werden. Selbstverständlich können anstelle der genannten Säuren auch deren funktionelle Derivate, wie Anhydride, Ester u. a., eingesetzt werden. Es können auch Mischungen der vorgenannten Verbindungen verwendet werden.

Zur Herstellung der hydroxylgruppenhaltigen Polyester werden als Alkoholkomponente bevorzugt Diole verwendet. Die teilweise Mitverwendung von anderen Polyolen, z. B. Triolen, ist möglich; Beispiele für geeignete Diole sind Ethylenglykol, Propylenglykole, wie 1,2- und 1,3-Propandiol sowie 2,2-Dimethylpropandiol-(1,3), Butandiole, wie Butandiol-(1,3) bzw. -(1,4), 3-Methylpentandiol-1,5, Hexandiole, z. B. Hexandiol-(1,6), 2,2,4(2,4,4)-Trimethylhexandiol-(1,6), Heptandiol-(1,7), Thioglykol, Octadecandiol-(1,18), 2,4-Dimethyl-2-propylheptandiol-(1,3), Buten- oder Butindiol-(1,4), Diethylenglykol, Triethylenglykol, cis- und trans-1,4-Cyclohexandimethanol, 1,4-Cyclohexandiole, 2,2-Bis-(4-hydroxy-cyclohexyl)-propan, bisoxyethyliertes 2,2-Bis-(4-hydroxyphenyl)-propan, Hydroxypivalinsäureneopentylglykolester; für andere Polyole: Glycerin, Hexantriol-(1,2,6), 1,1,1-Trimethylolpropan, 1,1,1-Trimethylolethan, Pentaerythrit, u. a.. Es können auch Mischungen der vorgenannten Verbindungen verwendet werden.

Bei der Herstellung der Polyester wird das Polyol in solchen Mengen eingesetzt, daß auf 1 Carboxygruppenäquivalent mehr als 1 OH-Gruppenäquivalent kommen, so daß Polyester der beschriebenen Charakteristik erhalten werden. Die erhaltenen Polyester stellen höherviskose Harze dar.

Die hydroxylgruppenhaltigen Polyester können in bekannter und üblicher Weise, d. h. durch Verestern oder Umestern, gegebenenfalls in Gegenwart von Katalysatoren, hergestellt werden.

Ausgangsmaterialien (Komponente b) für die erfindungsgemäßen flüssigen lK-PUR-Einbrennlacke sind Uretdiongruppen aufweisende Polyisocyanate auf Isophorondiisocyanatbasis, wie sie in den DE-OSS 30 30 513 und 37 39 549 beschrieben werden. Der NCO-Gehalt eines solchen IPDI-Uretdions beträgt 17 - 18 %, d. h. daß mehr oder minder hohe Anteile an Polyuretdionen des IPDI im Reaktionsprodukt vorliegen. Der Monomergehalt liegt bei < 1 %, und der NCO-Gehalt des Reaktionsproduktes nach dem Erhitzen auf 180-200 °C beträgt 37,1 - 37,7 %.

Zur Herstellung der für die erfindungsgemäßen lK-PUR-Einbrennlacke einzusetzenden Komponente b wird das uretdiongruppenhaltige Isophorondiisocyanat (abgekürzt: IPDI-Uretdion) mit den Diolen in einem NCO/OH-Äquivalenzverhältnis von 1:(0,5-0,9) bzw. (0,5-0,9):1 umgesetzt, und das so erhaltene Additionsprodukt gegebenenfalls, d. h. bei einem NCO/OH-Äquivalenzverhältnis von 1:(0,5-0,9), ganz oder teilweise mit den Blockierungsmitteln (ε-Caprolactam, Oxime, Monoalkohole, sekundäre Monoamine) umgesetzt.

Bei den zur Kettenverlängerung des IPDI-Uretdions eingesetzten Diolen handelt es sich um (cyclo)aliphatische zweiwertige Alkohole, wie z. B. Ethylenglykol, Propylen-(1,2) und -(1,3)-glykol, Butandiol-1,4, 2-Ethylhexandiol-1,6, Hexandiol-1,6, Octandiol-1,8, Neopentylglykol, 1,4-Bishydroxymethylcyclohexan, 2-Methylpropandiol-1,3, 3-Methylpentandiol-1,5, Diethylenglykol, Triethylenglykol, Tetraethylenglykol, Dipropylenglykol und Dibutylenglykol. In manchen Fällen hat es sich als zweckmäßig erwiesen, das zur Kettenverlängerung des IPDI-Uretdions eingesetzte Diol einer Molekülvergrößerung durch Kondensation mit einer aliphatischen Dicarbonsäure gemäß folgender Reaktionsgleichung zu unterziehen: 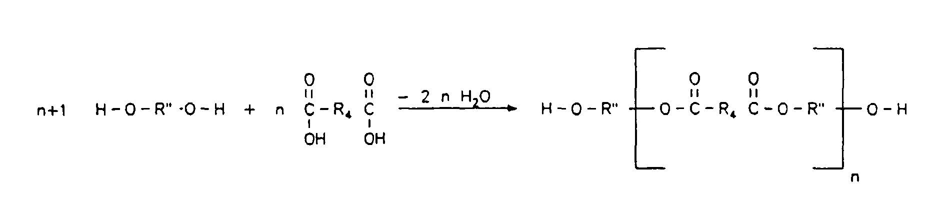 wobei n = 1 - 6 und R₄ ein gegebenenfalls alkylsubstituierter Alkylenrest mit 2 - 36 C-Atomen sind.

In der Komponente b sind die NCO-Gruppen teilweise oder ganz blockiert. Als Blockierungsmittel werden ε-Caprolactam, Oxime wie z. B. Acetonoxim, Methylethylketonoxim, Cyclohexanonoxim, Acetophenonoxim, Benzophenonoxim, Monoalkohole wie z. B. Methanol, Ethanol, 2-Ethylhexanol, n-Butanol, n-Decanol, Cyclohexanol, sekundäre Monoamine wie z. B. Dipropylamin, Dibutylamin, Dicyclohexylamin, eingesetzt.

Die Herstellung der für die erfindungsgemäßen lK-PUR-Einbrennlacke einsetzbaren Komponente b ist problemlos. In der Regel wird das IPDI-Uretdion bei 50 - 80 °C in Gegenwart geeigneter Lösungsmittel, wie z. B. Toluol, Xylol und aromatische Kohlenwasserstoffe, Methylglykolacetat, Ketone sowie beliebige Gemische dieser und anderer inerter organischer Lösemittel, mit dem Kettenverlängerungsmittel, dem Diol, so lange erhitzt, bis der gewünschte NCO-Gehalt erreicht ist. Liegen nach der Reaktion noch freie NCO-Gruppen vor - das ist der Fall, wenn das NCO/OH-Äquivalenzverhältnis der Reaktanten 1:(0,5-0,9) beträgt, wird das Reaktionsgemisch in bekannter Weise mit den angegebenen Blockierungsmitteln ganz oder teilweise umgesetzt. Dabei wird das Blockierungsmittel zu der Reaktionslösung bei 70 °C so zugegeben, daß die Temperatur des Reaktionsgemisches nicht über 80 °C steigt. Anschließend wird nach erfolgter Blockierungsmittelzugabe so lange weiter erhitzt, bis der gewünschte NCO-Gehalt erreicht ist. Man kann die Komponente b auch in umgekehrter Reihenfolge herstellen, d. h. zuerst Reaktion des IPDI-Uretdions mit dem Blockierungsmittel und anschließend Umsetzung mit dem Diol.

Beispiele für geeignete Bismut-Salze (Komponente c) sind verbindungen, in den R ein linearer oder verzweigter aliphatischer Kohlenwasserstoffrest mit 1-16 C-Atomen ist, insbesondere Bismutacetat, Bismutpropionat, Bismut-tri-methylacetat, sowie Bismutneododecanoat.

Die Umsetzung der hydroxylgruppenhaltigen Polyester mit den durch Deblockierung freigesetzten Polyisocyanaten wird durch die erfindungswesentlichen Bismut-Katalysatoren in Mengen von 0,5 bis 5 Gew.-T. beschleunigt, wobei die Härtungstemperaturen gegen den Stand der Technik gesenkt werden können. Durch die Verwendung der Bismut-Salze wird jedoch die Lagerstabilität der 1K-PUR-Einbrennlacke nicht negativ beeinflußt.

Für die erfindungsgemäßen lK-PUR-Einbrennlacke geeignete Lösungsmittel (Komponente d) sind solche, deren Siedepunkt mindestens bei 100 °C oder höher liegt. Die Siedetemperatur des eingesetzten Lösungsmittels ist von den jeweiligen Einbrenntemperaturen abhängig. Je höher diese liegen, desto höher können auch die Siedetemperaturen der zu verwendeten Lösungsmittel sein. Als Lösungsmittel kommen folgende Verbindungen in Frage:
Aromatische Kohlenwasserstoffe, wie Toluol oder Xylole (auch technische Gemische), Tetrahydronaphthalin, Cumol; Ketone, wie Methylisobutylketon, Diisobutylketon oder Isophoron oder Ester, wie n-Hexylacetat, Ethylglykolacetat, n-Butylglykolacetat, Methoxypropylacetat usw. Die genannten Verbindungen können auch als Gemische eingesetzt werden.

Zur Verbesserung der Verlaufeigenschaften des 1K-PUR-Einbrennlacks werden bei der Zubereitung sogenannte Verlaufmittel zugesetzt. Bei diesen Mitteln kann es sich um chemische Verbindungen bzw. deren Gemische sehr unterschiedlicher chemischer Art handeln, z. B. polymere oder monomere Verbindungen, beispielhaft Acetale, wie Polyvinylformal, Polyvinylacetal, Polyvinylbutyral, Polyvinylacetobutyral bzw. Di-2-ethylhexyl-i-butyraldehyd-acetal, Di-2-ethylhexyl-n-butyraldehyd-acetal, Di-ethyl-2-ethylhexanol-acetal, Di-n-butyl-2-ethyl-hexanol-acetal, Di-i-butyl-2-ethylhexanol-acetal, Di-2-ethylhexyl-acetaldehyd-acetal u. a., Ether, wie die polymeren Polyethylen- und Polypropylenglykole, Mischpolymerisate aus n-Butylacrylat und Vinylisobutylether, Keton-Aldehyd-Kondensationsharze, feste Siliconharze, Siliconöle oder auch Gemische von Zinkseifen von Fettsäuren und aromatischen Carbonsäuren. Derartige Verlaufmittel können in den Ansätzen in Mengen bis zu 3,0 Gew.-%, bezogen auf die Gesamtmenge Bindemittel (Polyester + blockiertes Polyisocyanat), Vernetzungskatalysator und Lösungsmittel bzw. -Gemisch, enthalten sein.

Die anderen Bestandteile des Einbrennlacks, wie Farbstoffe, Pigmente, Füllstoffe, wie Titandioxid, Ruß, organische und anorganische Buntpigmente, Talkum, Schwerspat u. ä., Thixotropiermittel, UV- und Oxidationsstabilisatoren u. a. können, bezogen auf die Menge Bindemittel (Polyester + blockiertes, Uretdiongruppen enthaltendes Polyisocyanat), Vernetzungskatalysator und Lösungsmittel bzw. -Gemisch je nach Einsatzzweckes des Einbrennlackes schwanken.

Die teilweise oder ganz blockierten uretdiongruppenhaltigen Polyisocyanate auf IPDI-Basis sind mit den hydroxylgruppenhaltigen Polymeren gut verträglich und liefern in organischen Lösungsmitteln homogene Lösungen, die sich sehr gut zur Anwendung als Einbrennlacke eignen. Die erfindungsgemäßen härtbaren Gemische sind bei Zimmertemperatur sehr gut lagerstabil, d. h. sie verändern sich weder physikalisch noch chemisch, d. h. die Bestandteile der Einbrennlacke reagieren bei Raumtemperatur nicht. Die Aushärtung der erfindungsgemäßen Einbrennlacke erfolgt je nach Anwendung im Temperaturintervall von 100 - 350 °C, vorzugsweise zwischen 130 und 300 °C, innerhalb von 40 Minuten bis zu 20 Sekunden. Es erfolgt bei der Härtung eine Deblockierung der Härter, wobei NCO-Gruppen freigesetzt werden. Die freigewordenen NCO-Gruppen reagieren dann mit den OH-Gruppen des Polyesters über eine NCO/OH-Reaktion unter Ausbildung von Urethanbindungen. Die gehärteten Überzüge bzw. Beschichtungen zeichnen sich durch sehr gute chemische und mechanische Eigenschaften sowie Chemikalienbeständigkeit aus.

Die erfindungsgemäßen lK-PUR-Einbrennlacke können in geeigneten Mischaggregaten, z. B. Rührkesseln, durch einfaches Mischen der Lackkomponenten a - d bei 80 - 100 °C hergestellt werden. Auch übliche Zuschlagstoffe, wie z. B. Pigmente, Verlaufmittel, Glanzverbesserer, Antioxidantien oder Hitzestabilisatoren, können ebenfalls in einfacher Weise der Lacklösung zugesetzt werden.

Die Applikation des Einkomponenten-Einbrennlackes auf die zu überziehenden Körper kann nach bekannten Methoden geschehen.

Nach der Applikation werden die Anstriche zur Aushärtung auf Temperaturen oberhalb der Aufspalttemperatur des Härtungsmittels, d. h. 130 - 350 °C, vorzugsweise 160 - 300 °C, erhitzt. Danach besitzen die resultierenden Überzüge die Vorteile, daß sie sehr gute Chemikalienbeständigkeit, einen ausgezeichneten Verlauf und eine gute Glanzhaltung bei Bewitterung aufweisen.

Zur Beschichtung mit den erfindungsgemäßen 1K-PUR-Einbrennlacken eignen sich alle Substrate, die die angegebenen Härtungstemperaturen ohne Einbuße der mechanischen Eigenschaften vertragen, wie Metallflächen u. ä..

Die erfindungsgemäßen lK-PUR-Einbrennlacke finden vor allem Anwendung in der Coil-Coating-Lackierung für wetterstabile Ein- und Zweischicht-Lakkierungen.

### Experimenteller Teil

Mit verschiedenen Katalysatoren oder Katalysatorkombinationen formulierte Einbrennlacke weisen je nach Art, Konzentration und Zusammensetzung der Katalysatoren, bei Raumtemperatur (23 °C) oder 50 °C, einen verarbeitungsfähigen Zustand von 14 Tagen bis 3 Monaten und länger auf.

Zur Ermittlung der Wirksamkeit und Einflußnahme von typischen PUR-Katalysatoren auf die Lagerstabilität der Uretdionstrukturen enthaltenden 1K-Systeme wurden vergleichend verschiedene Katalysatoren und deren Kombinationen eingesetzt und geprüft.

Die Bemessung der Katalysatorkonzentrationen in den 1K-Systemen erfolgte in der Weise, daß die katalytisch beschleunigten Einbrennlacke bei deutlicher Verkürzung der Härtungszeiten ein vergleichsweise einheitliches Reaktionsniveau aufweisen.

Bewertet wurde im Vergleichszeitraum das Viskositätsverhalten der Flüssiglacke und Veränderungen des spezifischen, physikalischen Eigenschaftsbildes der resultierenden, in einem Lackumlufttrockenschrank ausgehärteten Lackfilme.

Zur Untersuchung der Lagerstabilität wurde ein Basis-Klarlack (Rezeptur I) eingesetzt, und für die Reaktivitätseinstellung kam ein Basis-Weißlack (Rezeptur II) zur Anwendung.

Die verwendeten Abkürzungen sind der nächsten Seite zu entnehmen.

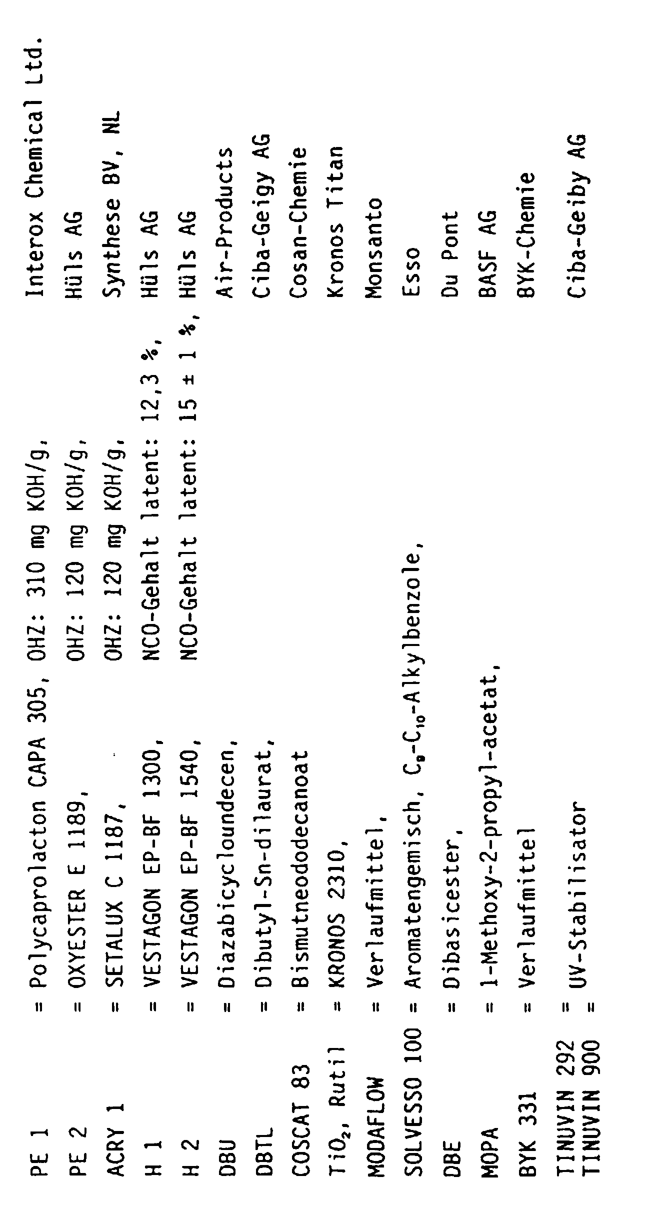

| **Basis Lacksysteme** | | |
|---|---|---|
| | Rezeptur I [Massen-%] | Rezeptur II [Massen-%] |
| PE 1 | 14,1 | 10,7 |
| H 1 | 66,4 | 50,5 |
| TiO₂, PVK 19 | - | 26,5 |
| Modaflow, 10%ig in BA | - | 1,0 |
| SOLVESSO 100 | 6,5 | 3,8 |
| DBE | 6,5 | 3,8 |
| MOPA | 6,5 | 3,7 |

Da pigmentierte Lackfilme hinsichtlich des Beurteilungsspektrums von Lackfilmdaten besser geeignet sind als Klarlackfilme, wurde das Veißlacksystem gemäß Rezeptur II mit verschiedenen Katalysatoren auf ein vergleichsweise einheitliches Reaktionsniveau bezüglich der Härtungsbedingungen eingestellt und einer lacktechnischen Prüfung unterzogen. Um Einflüsse der aus verschiedenen chemischen Verbindungen bestehenden Katalysatoren auf die Lagerstabilität, wie Färbung oder Trübung, der Flüssiglacke zu erfassen, wurden für diese Untersuchung Klarlacke gemäß Rezeptur I mit identischen Katalysatoren und Konzentrationen, bezogen auf Bindemittelgehalt, eingesetzt und geprüft.

Die mit dem Bismutkatalysator (COSCAT 83) formulierten Einbrennlacke weisen bei Raumtemperatur-Lagerung eine sehr hohe Stabilität bezüglich des Verarbeitungszustandes auf.

Resultierende Lackfilme zeigen nach 3 Monaten Lagerung der Flüssiglacke bei Raumtemperatur oder 6 Wochen Lagerung bei 50 °C ein unverändertes physikalisches Eigenschaftsbild.

In Tabelle 1 sind die auf der Rezeptur II basierenden Formulierungsbeispiele bezüglich der Katalyse zusammengestellt.

**Tabelle 1:**

| Einfluß der Katalyse auf die Härtungsbedingungen | | | | | |
|---|---|---|---|---|---|
| **Basis Rezeptur II** | | | | | |
| **Beispiel** | **Katalysator** | **Massen-% auf Bindemittel** | **Härtungszeit bei [min]** | | |
| | | | **200 °C** | **180 °C** | **160 °C** |
| 1 | Nullprobe | - | 10 | 20 | - |
| 2 | DBTL | 0,3 | 4 | 8 | 25 |
| 3 | Ca-octoat/DBTL | 0,4/0,2 | 5 | 10 | 30 |
| 4 | Sn-II-octoat/DBTL | 0,4/0,2 | 6 | 12 | - |
| 5 | Fe-III-acetylacetonat | 0,5 | 5 | 10 | - |
| 6 | DBU | 0,5 | 6 | 10 | 30 |
| 7 | COSCAT 83 | 1,0 | 5 | 10 | 30 |

Die in Tabelle 2 aufgeführten wesentlichen Eigenschaften der Lackfilme sind innerhalb natürlicher Schwankungsbreiten repräsentativ für die in Tabelle 1 angegebenen Härtungsbedingungen.

**Tabelle 2:**

| **Lackfilmdaten der Formulierungsbeispiele 1 bis 7** | | | | | | | | |
|---|---|---|---|---|---|---|---|---|
| **Beispiel** | **SD** | **GS** | **HB** | **HK** | **ET** | **KS** | **GG** | |
| | **[µm]** | | | **[s]** | **[mm]** | **[in dlb]** | **20 ≮** | **60 ≮** |
| 1 | 25 | 0 | 125 | 164 | 9 | > 80 | 60 | 86 |
| 2 | 24 - 26 | 0 | 125 | 168 | 8 | > 80 | 58 | 88 |
| 3 | 24 - 27 | 0 | 125 | 168 | 9 | > 80 | 40 | 80 |
| 4 | 22 - 26 | 0 | 125 | 171 | 8 | > 80 | 41 | 83 |
| 5 | 24 | 0 | 125 | 167 | 9 | > 80 | 62 | 87 |
| 6 | 25 - 28 | 0 | 125 | 169 | 9 | > 80 | 61 | 87 |
| 7 | 24 - 26 | 0 | 125 | 169 | 9 | > 80 | 52 | 87 |
| SD = Schichtdicke | | | | | | | | |
| GS = Gitterschnitt, nach DIN 53 151 | | | | | | | | |
| HB = Eindruckhärte Buchholz, nach DIN 53 153 | | | | | | | | |
| HK = Härte König, nach DIN 53 157 | | | | | | | | |
| ET = Erichsentiefung, nach DIN 53 156 | | | | | | | | |
| KS = Kugelschlag, nach ASTM D-2794/84 | | | | | | | | |
| GG = Glanz Gardner, nach ASTM D-523 | | | | | | | | |

In den Tabellen 3 - 6 ist der Einfluß der Katalyse auf die Lagerstabilität der flüssigen Einbrennlacke zusammengefaßt. Hier zeigt sich deutlich eine unterschiedliche Wirkung der aus verschiedenen chemischen Verbindungen bestehenden Katalysatoren. Geprüft wurden unpigmentierte Einbrennlacke (KL 1 - KL 7), die gemäß Rezeptur I, identisch zu Rezeptur II, mit Katalysatoren formuliert wurden. Untersucht wurde das Viskositätsverhalten über einen Zeitraum von 3 Monaten und parallel dazu das Härtungsverhalten sowie die physikalischen Eigenschaften und eine Chemikalienbeständigkeit bestimmt.

**Tabelle 3:**

| Einfluß der Katalyse auf die Viskosität, Lagerung bei Raumtemperatur | | | | | | | |
|---|---|---|---|---|---|---|---|
| **Formulierungsbeispiele** | | | | | | | |
| **Lagerzeit bei Raumtemperatur** | **KL 1** | **KL 2** | **KL 3** | **KL 4** | **KL 5** | **KL 6** | **KL 7** |
| | **Viskosität der gelagerten Klarlacke bei 23 °C [mPa·s]** | | | | | | |
| Ausgangswert | 495 | 430 | 460 | 430 | 380 | 420 | 380 |
| 1 Woche | 500 | 430 | 480 | 430 | 500 | geliert | 380 |
| 1 Monat | 500 | 450 | 600 | 440 | geliert | | 390 |
| 2 Monate | 510 | 470 | 1000 | 460 | | | 390 |
| 3 Monate | 520 | 500 | 1400 | 470 | | | 400 |
| KL = Klarlacke | | | | | | | |
| KL 1 = 0 | | | | | | | |
| KL 2 = 0,3 DBTL | | | | | | | |
| KL 3 = 0,4/0,2 Ca-octoat/DBTL Massen-%, bezogen auf | | | | | | | |
| KL 4 = 0,4/0,2 Zinn-II-octoat/DBTL Bindemittel | | | | | | | |
| KL 5 = 0,5 Fe-III-acetylacetonat | | | | | | | |
| KL 6 = 0,5 DBU | | | | | | | |
| KL 7 = 1,0 COSCAT 83 | | | | | | | |

**Tabelle 4:**

| Einfluß der Katalyse auf die Viskosität, Lagerung bei 50 °C | | | | | | | |
|---|---|---|---|---|---|---|---|
| **Formulierungsbeispiele** | | | | | | | |
| **Lagerzeit bei 50 °C** | **KL 1** | **KL 2** | **KL 3** | **KL 4** | **KL 5** | **KL 6** | **KL 7** |
| | **Viskosität der gelagerten Klarlacke bei 23 °C [mPa·s]** | | | | | | |
| Ausgangswert | 495 | 430 | 460 | 430 | 380 | 420 | 380 |
| 1 Tag | 500 | 450 | 490 | 430 | 390 | geliert | 380 |
| 3 Tage | 500 | 470 | 550 | 440 | 560 | | 380 |
| 7 Tage | 510 | 500 | 630 | 470 | 1200 | | 400 |
| 2 Wochen | 515 | 580 | 830 | 500 | geliert | | 400 |
| 3 Wochen | 520 | 630 | 1180 | 540 | | | 410 |
| 4 Wochen | 530 | 670 | 1660 | 570 | | | 430 |
| 5 Wochen | 560 | 730 | 1800 | 610 | | | 440 |
| 6 Wochen | 590 | 770 | 3100 | 640 | | | 440 |
| 7 Wochen | 600 | 820 | 7000 | 650 | | | 440 |
| 8 Wochen | 610 | 830 | geliert | 660 | | | 450 |

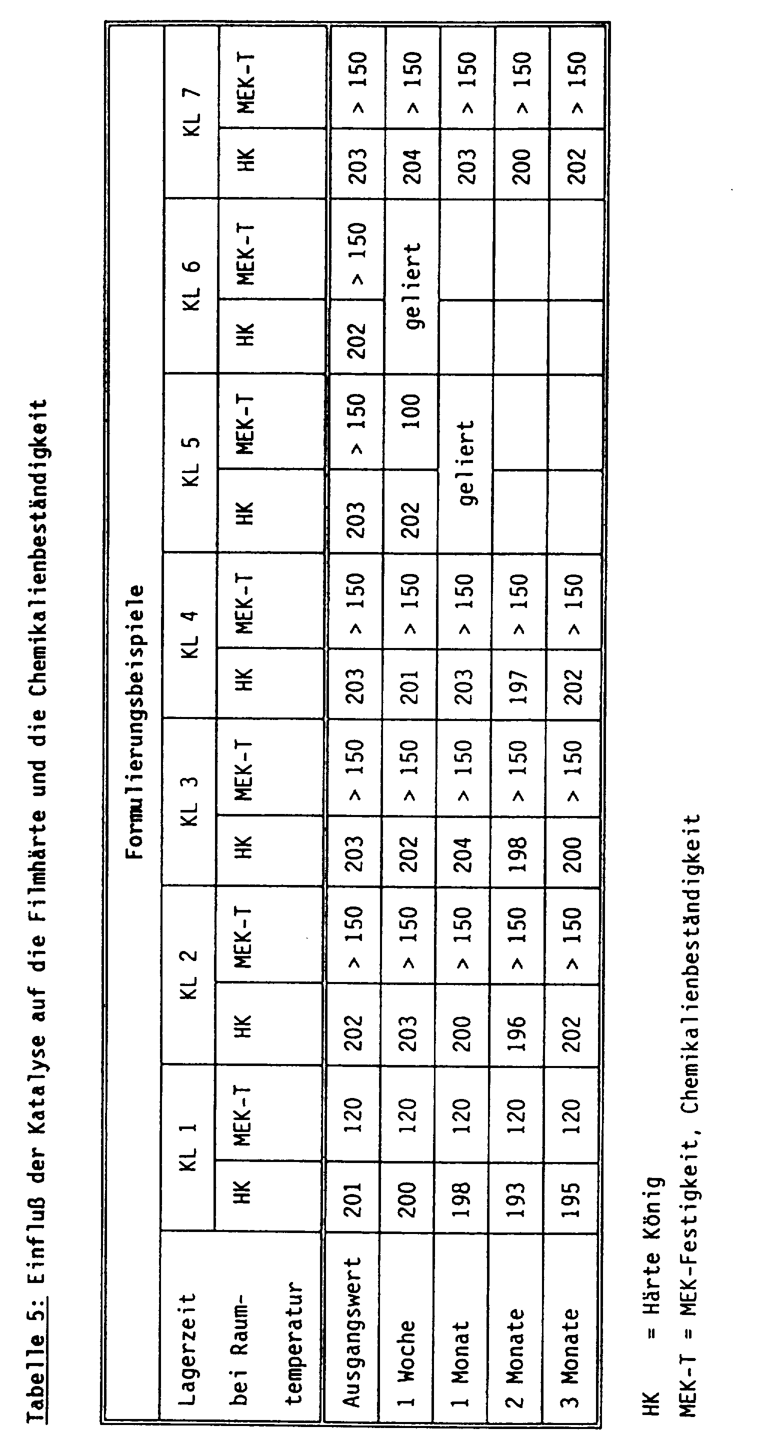

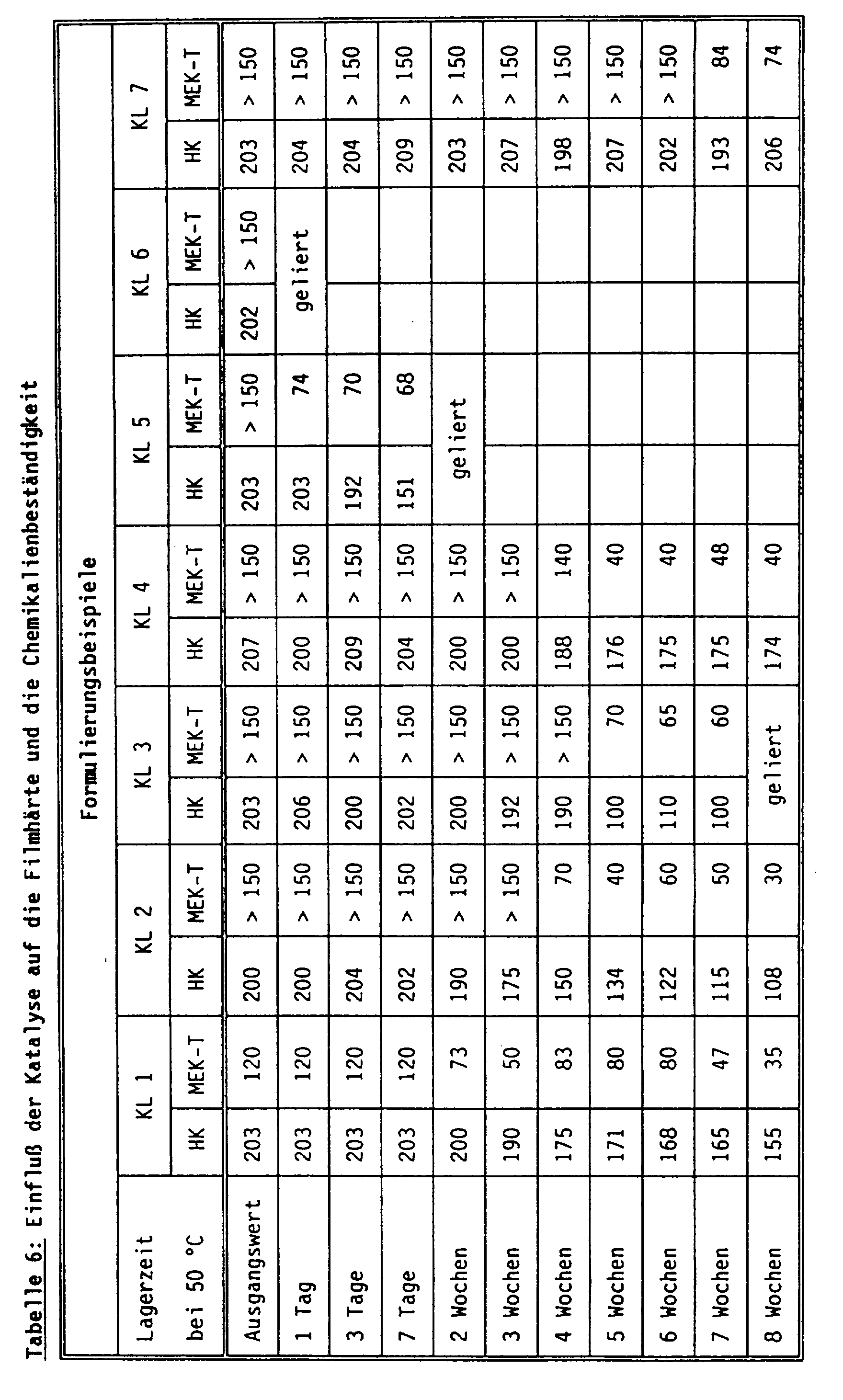

Beispiele IPDI-basierender, uretdiongruppenhaltiger, einkomponentiger Einbrennlacke, die mit handelsüblichen Lackpolyolen formuliert und mit COSCAT 83 katalysiert sind.

In den Beispielen 8 - 9 ist ein Acrylatharzpolyol eingesetzt, und in den Beispielen 10 - 11 ist ein Polyesterpolyol verarbeitet, das auf dem Coil Coating-Sektor Anwendung findet.

In Beispiel 12 ist ein Polycaprolacton mit einem handelsüblichen IPDI-basierenden Uretdionharz kombiniert.

In Tabelle 7 sind die Zusammensetzungen (Beispiele 8 - 12) verschiedener Einbrennlack-Formulierungen zusammengefaßt.

Die Tabelle 8 enthält die Härtungsbedingungen und wesentliche Lackfilmdaten der Lack-Formulierungen aus Tabelle 7.

**Tabelle 7**

| **Komponenten** | **Beispiele [Massen-%]** | | | | |
|---|---|---|---|---|---|
| | **8** | **9** | **10** | **11** | **12** |
| PE 1 | | | | | 18,9 |
| ACRY 1 | 37,2 | 27,3 | | | |
| PE 2 | | | 39,1 | 29,5 | |
| H 1 | 36,7 | 26,8 | 32,5 | 24,5 | |
| H 2 | | | | | 48,8 |
| TiO₂, PVK 19 | | 24,4 | | 24,6 | |
| MODAFLOW | | 0,1 | | 0,1 | |
| BYK 331 | | 0,2 | 0,2 | | 0,2 |
| TINUVIN 292 | | | 0,2 | | |
| TINUVIN 900 | | | 0,2 | | |
| DBE/SOLVESSO/MOPA 1:1:1 | 25,7 | 20,9 | 27,4 | 21,0 | 31,6 |
| COSCAT 83 | 0,4 | 0,3 | 0,4 | 0,3 | 0,5 |

Die eingestellte Viskosität beträgt ca. 60 sec, gemessen im DIN-4-Becher bei 20 °C.

**Tabelle 8**

| | **Beispiele** | | | | |
|---|---|---|---|---|---|
| | **8** | **9** | **10** | **11** | **12** |
| Härtung, min/°C | 5/200 | 5/200 | 1/300 | 1/300 | 6/200 |
| GS | 0 | 0 | 0 | 0 | 0 |
| HB | 111 | 125 | 125 | 125 | 111 |
| ET | 9,5 | 9 | 9 | 9 | 10 |
| HK | 168 | 150 | 200 | 180 | 203 |
| KS | > 80 | 70 | 70 | 60 | > 80 |
| GG, 60 °≮ | - | 83 | - | 87 | - |

Die Lackfilme wurden mittels Spiralrakel auf gebondertem, 1 mm dickem Stahlblech appliziert und im Lackumlufttrockenschrank eingebrannt.

Die ausgehärteten Lackfilme weisen ausgezeichnete Eigenschaften bezüglich Flexibilität, Haftung sowie Härte auf.

## Patentansprüche

1. Flüssige Einkomponenten-PUR-Einbrennlacke, im wesentlichen enthaltend
a) hydroxylgruppenhaltige Polymere mit Hydroxylzahlen zwischen 10 und 300 mg KOH/g,
b) teilweise oder ganz blockierte, uretdiongruppenhaltige Polyisocyanate auf Basis von Isophorondiisocyanat,
c) organische Bismut-Verbindungen folgender Zusammensetzung: 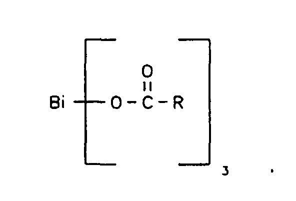 wobei R ein aliphatischer Kohlenwasserstoffrest mit 1 bis 16 C-Atomen ist,
d) organische Lösemittel oder Lösungsmittelgemische mit einem Siedepunkt von ≥ 100°C,
wobei (a + b) gleich 40 bis 70 Gew.-T., c gleich 0,5 bis 5 Gew.-T. und d gleich 30 bis 60 Gew.-T. betragen, und a mit b so zueinander im OH-NCO-Äquivalenzverhältnis stehen, daß pro OH-Äquivalent der Komponente a 0,8 bis 1,2 NCO-Äquivalente der Komponente b vorhanden sind.

2. Flüssige Einkomponenten-PUR-Einbrennlacke nach Anspruch 1,
dadurch gekennzeichnet,
daß die hydroxylhaltigen Polymeren Hydroxylzahlen zwischen 25 bis 150 mg KOH/g aufweisen.

3. Flüssige Einkomponenten-PUR-Einbrennlacke nach den Ansprüchen 1 bis 2,
dadurch gekennzeichnet,
daß die Polyisocyanate mit Glykolen kettenverlängert sind.

4. Flüssige Einkomponenten-PUR-Einbrennlacke nach den Ansprüchen 1 bis 3,
dadurch gekennzeichnet,
daß der aliphatische Kohlenwasserstoffrest linear oder verzweigt ist.

5. Flüssige Einkomponenten-PUR-Einbrennlacke nach den Ansprüchen 1 bis 4,
dadurch gekennzeichnet,
daß sie zusätzlich Farbstoffe, Füllstoffe, Glanzverbesserer, Pigmente, Hitze-, UV-, Oxidationsstabilisatoren und Verlaufsmittel enthalten.

6. Verfahren zur Herstellung von flüssigen Einkomponenten-PUR-Einbrennlacken, erhältlich durch Umsetzung von
a) hydroxylgruppenhaltigen Polymeren mit Hydroxylzahlen zwischen 10 und 300 mg KOH/g,
b) teilweise oder ganz blockierten, uretdiongruppenhaltigen Polyisocyanaten auf Basis von Isophorondiisocyanat,
c) organischen Bismut-Verbindungen folgender Zusammensetzung: 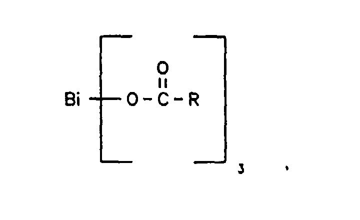 wobei R ein aliphatischer Kohlenwasserstoffrest mit 1 bis 16 C-Atomen ist,
und
d) in Anwesenheit von organischen Lösemitteln oder Lösungsmittelgemischen mit einem Siedepunkt von ≥ 100°C,
wobei (a + b) gleich 40 bis 70 Gew.-T., c gleich 0,5 bis 5 Gew.-T. und d gleich 30 bis 60 Gew.-T. betragen, und a mit b so zueinander im OH-NCO-Äquivalenzverhältnis stehen, daß pro OH-Äquivalent der Komponente a 0,8 bis 1,2 NCO-Äquivalente der Komponente b vorhanden sind.

7. Verwendung der flüssigen Einkomponenten-PUR-Einbrennlacke für Coil-Coating-Lackierungen.

8. Verwendung nach Anspruch 7 für wetterstabile Ein- und Zweischichtlackierungen.

## Claims

1. A liquid one-component PU stoving enamel, essentially comprising
a) hydroxyl-containing polymers having hydroxyl numbers of from 10 to 300 mg KOH/g,
b) fully or partly blocked, isophorone diisocyanate-based polyisocyanates containing uretdione groups,
c) organobismuth compounds of the following composition: 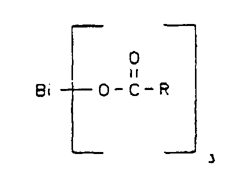 where R is an aliphatic hydrocarbon radical having 1 to 16 carbon atoms,
d) organic solvents or solvent mixtures having a boiling point of ≥100°C,
(a + b) amounting to from 40 to 70 parts by weight, c amounting to from 0.5 to 5 parts by weight and d amounting to from 30 to 60 parts by weight, and the OH:NCO equivalents ratio of a to b being such that there are from 0.8 to 1.2 NCO equivalents of component b per OH equivalent of component a.

2. A liquid one-component PU stoving enamel according to claim 1, characterized in that the hydroxyl-containing polymers have hydroxyl numbers of from 25 to 150 mg KOH/g.

3. A liquid one-component PU stoving enamel according to either of claims 1 and 2, characterized in that the polyisocyanates are chain-extended with glycols.

4. A liquid one-component PU stoving enamel according to any of claims 1 to 3, characterized in that the aliphatic hydrocarbon radical is linear or branched.

5. A liquid one-component PU stoving enamel 1 as claimed in any of claims 1 to 4, characterized in that it additionally comprises dyes, fillers, gloss enhancers and pigments, heat, W and oxidation stabilizers, and levelling agents.

6. A process for producing a liquid one-component PU stoving enamel obtainable by reacting
a) hydroxyl-containing polymers having hydroxyl numbers of from 10 to 300 mg KOH/g,
b) fully or partly blocked, isophorone diisocyanate-based polyisocyanates containing uretdione groups,
c) organobismuth compounds of the following composition: 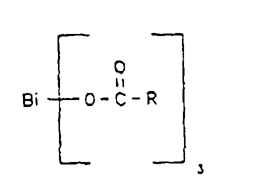 where R is an aliphatic hydrocarbon radical having 1 to 16 carbon atoms,
and
d) in the presence of organic solvents or solvent mixtures having a boiling point of ≥100°C,
(a + b) amounting to from 40 to 70 parts by weight, c amounting to from 0.5 to 5 parts by weight and d amounting to from 30 to 60 parts by weight, and the OH:NCO equivalents ratio of a to b being such that there are from 0.8 to 1.2 NCO equivalents of component b per OH equivalent of component a.

7. The use of the liquid one-component PU stoving enamel for coil coating.

8. The use according to claim 7 for a weather-stable one-coat or two-coat system.

## Revendications

1. Laques à cuire-PUR-monocomposants liquides, comprenant essentiellement :
a) des polymères s contenant des groupes hydroxyles, avec des indices hydroxyle compris entre 10 et 300 mg KOH/g,
b) des polyisocyanates partiellement ou complètement bloqués, contenant des groupes d'uretdions, à base d'iso-phorondiisocyanate,
c) des combinaisons bismuth organiques de la composition suivante : 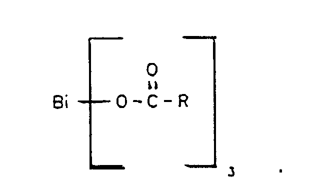 dans laquelle R est un résidu d'hydrocarbure aliphatique ayant de 1 à 16 atomes de carbone,
d) des solvants organiques ou des mélanges de solvants organiques ayant un point d'ébullition ≥ 100°C.
où (a + b) est égal 70 parties en poids, c est égal à 0,5 à 5 parties en poids, d est égal à 30 à 60 parties en poids, et a et b étant l'un par rapport à l'autre dans un rapport d'équivalence OH-NCO tel que, par équivalent OH du composant a, on ait de 0,8 à 1,2 équivalents NCO du composant b.

2. Laques à cuire-PUR-monocomposants liquides selon la revendication 1,
caractérisées en ce que
les polymères contenant des radicaux hydroxyle ont des indices hydroxyles compris entre 25 et 150 mg KOH/g.

3. Laques à cuire-PUR-monocomposants liquides selon les revendications 1 à 2,
caractérisées en ce que
les isocyanates ont leurs chaînes prolongées par des glycols.

4. Laques à cuire-PUR-monocomposants liquides selon les revendications 1 à 3,
caractérisées en ce que
le résidu d'hydrocarbure aliphatique est linéaire ou ramifié.

5. Laques à cuire-PUR-monocomposants liquides selon les revendications 1 à 4,
caractérisées en ce qu'
elles comprennent en outre des colorants, des charges, des améliorateurs d'éclat, des pigments déstabilisateurs à la chaleur, aux UV ou à l'oxydation et des agents d'évolution.

6. Procédé de fabrication de laques à cuire-PUR-monocomposants liquides, obtenues par conversion de :
a) polymères contenant des groupes hydroxyle, avec des indices hydroxyle compris entre 10 et 300 mg KOH/g,
b) polyisocyanates partiellement ou complètement bloqués, contenant des groupes d'uretdions, à base d'isophorondiisocyanate,
c) combinaisons bismuth organiques de la composition suivante : 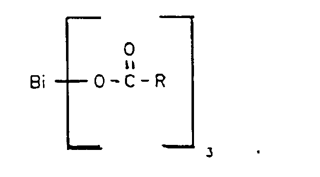 dans laquelle R est un résidu d'hydrocarbure aliphatique ayant de 1 à 16 atomes de carbone, et
d) en présence de solvants organiques ou de mélanges de solvants organiques ayant un point d'ébullition ≥ 100°C.
où (a + b) est égal 70 parties en poids, c est égal à 0,5 à 5 parties en poids, d est égal à 30 à 60 parties en poids, et a et b étant l'un par rapport à l'autre dans un rapport d'équivalence OH-NCO tel que, par équivalent OH du composant a, on ait de 0,8 à 1,2 équivalents NCO du composant b.

7. Utilisation de la laque à cuire-PUR pour des vernissages de revêtements de bobines de produits métallurgiques.

8. Utilisation selon la revendication 7, pour des vernissages stables aux intempéries, à une et à deux couches.
